# EUROPÄISCHE PATENTANMELDUNG

(11) **EP 3 321 071 A1**
(43) Veröffentlichungstag der Anmeldung: **16.05.2018**
(21) Anmeldenummer: 17177216.3
(22) Anmeldetag: 21.06.2017
(51) Int. Cl.: B29C 64/364, B29C 64/35

(54) **VORRICHTUNG ZUR ADDITIVEN HERSTELLUNG DREIDIMENSIONALER OBJEKTE**

(30) Priorität: 14.11.2016 DE 102016121783
(71) Anmelder: CL Schutzrechtsverwaltungs GmbH, 96215 Lichtenfels (DE)
(72) Erfinder: Stammberger, Jens, 96472 Rödental (DE); Diller, Christian, 96215 Lichtenfels (DE); Hetzel, Ralf, 96231 Bad Staffelstein (DE)
(74) Vertreter: Kohl, Fabian Hanno

(57) **Zusammenfassung**

Vorrichtung (1) zur additiven Herstellung dreidimensionaler Objekte (2) durch sukzessives schichtweises selektives Belichten und damit einhergehendes sukzessives schichtweises selektives Verfestigen von Baumaterialschichten aus einem vermittels eines Energiestrahls verfestigbaren Baumaterial (3), umfassend eine, wenigstens ein, insbesondere rohrförmiges, Leitungselement umfassende Leitungsstruktur (12), welche von einem im Rahmen der Durchführung additiver Bauvorgänge in einer Prozesskammer (8) der Vorrichtung (1) entstehenden, insbesondere prozessbedingt entstehende Verunreinigungen enthaltenden, Prozessgas (9) durchströmbar ist, und eine in die Leitungsstruktur (12) geschaltete Filtereinrichtung (7), welche zur Filterung des Prozessgases (9) eingerichtet ist, wobei die Filtereinrichtung (7) mehrere Filtermodule (14) umfasst, welche auswechselbar in die Leitungsstruktur (12) geschaltet anordenbar oder angeordnet sind, wobei in die Leitungsstruktur (12) geschaltet angeordnete Filtermodule (14) über eine der Filtereinrichtung (7) zugeordnete Schalteinrichtung (29) individuell in einen Betriebszustand, in welchem diese von dem Prozessgas (9) durchströmbar in die Leitungsstruktur (12) geschaltet sind, und in einen Nichtbetriebszustand, in welchem diese nicht von dem Prozessgas (9) durchströmbar in die Leitungsstruktur (12) geschaltet sind, schaltbar.

## Beschreibung

Die Erfindung betrifft eine Vorrichtung zur additiven Herstellung dreidimensionaler Objekte durch sukzessives schichtweises selektives Belichten und damit einhergehendes sukzessives schichtweises selektives Verfestigen von Baumaterialschichten aus einem vermittels eines Energiestrahls verfestigbaren Baumaterial mit den weiteren Merkmalen des Oberbegriffs des Anspruchs 1.

Entsprechende Vorrichtungen zur additiven Herstellung dreidimensionaler Objekte sind, z. B. in Form von Vorrichtungen zur Durchführung selektiver Lasersinter- bzw. selektiver Laserschmelzverfahren, dem Grunde nach bekannt.

Entsprechende Vorrichtungen umfassen typischerweise eine, wenigstens ein, insbesondere rohrförmiges, Leitungselement umfassende Leitungsstruktur sowie eine in die Leitungsstruktur geschaltete Filtereinrichtung. Die Leitungsstruktur ist von einem im Rahmen der Durchführung additiver Bauvorgänge in einer Prozesskammer der Vorrichtung entstehenden, insbesondere prozessbedingt entstehende Verunreinigungen enthaltenden, Prozessgas durchströmbar. Die Filtereinrichtung ist zur Filterung des Prozessgases eingerichtet

Bis dato muss der Betrieb entsprechender Vorrichtungen unterbrochen werden, wenn die Filtereinrichtung, z. B. bei Erreichen eines Sättigungszustands eines der Filtereinrichtung zugehörigen Filtermoduls, kurzzeitig, z. B. für einen Austausch eines entsprechenden Filtermoduls, außer Betrieb genommen wird. Ein Betrieb der Vorrichtung, d. h. die Durchführung additiver Bauvorgänge, ist nur möglich, wenn auch ein Betrieb der Filtereinrichtung möglich ist.

Dies stellt, insbesondere im Hinblick auf eine effiziente kontinuierliche Durchführung additiver Bauvorgänge, einen verbesserungswürdigen Zustand dar.

Der Erfindung liegt die Aufgabe zugrunde, eine, insbesondere im Hinblick auf eine effiziente kontinuierliche Durchführung additiver Bauvorgänge, verbesserte Vorrichtung zur additiven Herstellung dreidimensionaler Objekte anzugeben.

Die Aufgabe wird durch eine Vorrichtung gemäß Anspruch 1 gelöst. Die hierzu abhängigen Ansprüche betreffen mögliche Ausführungsformen der Vorrichtung.

Die hierin beschriebene Vorrichtung ("Vorrichtung") ist zur additiven Herstellung dreidimensionaler Objekte, d. h. beispielsweise technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial eingerichtet. Bei dem Baumaterial kann es sich um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten des additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein.

Die Vorrichtung umfasst die zur Durchführung additiver Bauvorgänge typischerweise erforderlichen Funktionskomponenten. Hierzu zählen insbesondere eine Beschichtungseinrichtung, welche zur Ausbildung selektiv zu verfestigender Baumaterialschichten (in der Bauebene der Vorrichtung) eingerichtet ist, und eine Belichtungseinrichtung, welche zur selektiven Belichtung selektiv zu verfestigender Baumaterialschichten (in der Bauebene der Vorrichtung) eingerichtet ist. Die Beschichtungseinrichtung umfasst typischerweise mehrere Bestandteile, d. h. z. B. ein ein, insbesondere klingenförmiges, Beschichtungswerkzeug umfassendes Beschichtungselement sowie eine Führungseinrichtung zur Führung des Beschichtungselements entlang einer definierten Bewegungsbahn. Auch die Belichtungseinrichtung umfasst typischerweise mehrere Bestandteile, d. h. z. B. eine Strahlerzeugungseinrichtung zur Erzeugung eines Energie- bzw. Laserstrahls, eine Strahlablenkeinrichtung (Scannereinrichtung) zur Ablenkung eines von der Strahlerzeugungseinrichtung erzeugten Energie- bzw. Laserstrahls auf einen zu belichtenden Bereich einer selektiv zu verfestigenden Baumaterialschicht sowie diverse optische Elemente, wie z. B. Linsenelemente, Objektivelemente, etc.

Die genannten Funktionskomponenten der Vorrichtung sind typischerweise an oder in einer, typischerweise inertisierbaren, Prozesskammer der Vorrichtung angeordnet oder ausgebildet.

Die Vorrichtung umfasst eine wenigstens ein, insbesondere rohrförmiges, Leitungselement umfassende Leitungs- bzw. Rohrstruktur ("Leitungsstruktur"), welche von einem im Rahmen der Durchführung additiver Bauvorgänge in einer Prozesskammer der Vorrichtung entstehenden, insbesondere prozessbedingt entstehende Verunreinigungen enthaltenden, Prozessgas durchströmbar bzw. durchströmt ist. Bei entsprechenden Verunreinigungen in dem Prozessgas bzw. in der die Leitungsstruktur durchströmenden Prozessgasströmung handelt es sich insbesondere um prozessbedingte entstehende Rauch- oder Schmauchpartikel und/oder um nicht verfestigte Baumaterialpartikel ("Schweißspritzer"). Die Leitungsstruktur ist mit einem Leitungselement(abschnitt) typischerweise an einen, insbesondere eine Ausströmöffnung umfassenden, Ausströmbereich der Prozesskammer, über welchen (zu filterndes) Prozessgas aus der Prozesskammer in die Leitungsstruktur strömen kann, und mit einem weiteren Leitungselement(abschnitt) an einen, insbesondere eine Einströmöffnung umfassenden, Einströmbereich der Prozesskammer, über welchen (gefiltertes) Prozessgas aus der Leitungsstruktur in die Prozesskammer strömen kann, angeschlossen.

Die Vorrichtung umfasst weiter eine in die Leitungsstruktur geschaltete Filtereinrichtung, welche zur Filterung des im Rahmen der Durchführung additiver Bauvorgänge in einer Prozesskammer der Vorrichtung entstehenden, insbesondere prozessbedingt entstehende Verunreinigungen enthaltenden, Prozessgases eingerichtet ist. Unter einer Filterung des Prozessgases ist ein Entfernen entsprechender Verunreinigungen aus dem Prozessgas zu verstehen. Bei entsprechenden Verunreinigungen in einem zu filternden Prozessgas handelt es sich, wie erwähnt, insbesondere um prozessbedingte entstehende Rauch- oder Schmauchpartikel und/oder um nicht verfestigte Baumaterialpartikel ("Schweißspritzer").

Die Filtereinrichtung umfasst mehrere, d. h. wenigstens zwei, Filtermodule. Jedes Filtermodul umfasst ein Filtermodulgehäuse. Jedes Filtermodulgehäuse umfasst einen eine Einströmseite bildenden Einströmabschnitt und einen eine Ausströmseite bildenden Ausströmabschnitt und einen zwischen dem Einströmabschnitt und dem Ausströmabschnitt angeordneten oder ausgebildeten geometrisch definiert konfigurierten Filterkörperaufnahmeraum. Wie sich im Weiteren ergibt, kann der Filterkörperaufnahmeraum zur Aufnahme (nur) einer definierten Anzahl geometrisch definiert konfigurierter Filterkörper eingerichtet sein. Unabhängig von seiner geometrischen Konfiguration ist ein Filterkörper aus einem, z. B. gewebeartigen, porösen oder zellularen, Filtermaterial gebildet bzw. umfasst wenigstens ein solches.

Zweckmäßig bildet ein jeweiliges Filtermodul eine vorkonfigurierbare oder vorkonfigurierte, gesondert handhabbare Baugruppe. Das Handling jeweiliger Filtermodule ist sonach vereinfacht, Filtermodule können problemlos, insbesondere auch automatisierbar bzw. automatisiert, z. B. im Zusammenhang mit einem Austausch bzw. Wechsel gehandhabt werden.

Die Filtermodule sind (bedarfsweise) auswechselbar in die Leitungsstruktur geschaltet anordenbar oder angeordnet. Die Filtermodule lassen sich also derart in der Leitungsstruktur anordnen, dass diese in die Leitungsstruktur geschaltet sind. Ein in die Leitungsstruktur geschaltet angeordnetes Filtermodul ist von dem die Leitungsstruktur durchströmenden Prozessgas durchströmbar. Ein in die Leitungsstruktur geschaltet angeordnetes Filtermodul ermöglicht grundsätzlich eine Filterung des Prozessgases.

Jeweilige in die Leitungsstruktur geschaltet angeordnete Filtermodule sind individuell, d. h. einzeln, gruppenweise oder gesamt, über eine der Filtereinrichtung zugeordnete Schalteinrichtung in einen jeweiligen Betriebszustand, in welchem ein jeweiliges Filtermodul von dem Prozessgas durchströmbar in die Leitungsstruktur geschaltet ist, und in einen jeweiligen Nichtbetriebszustand, in welchem ein jeweiliges Filtermodul nicht von dem Prozessgas durchströmbar in die Leitungsstruktur geschaltet ist, schaltbar. Die Schalteinrichtung umfasst sonach mehrere, d. h. wenigstens zwei, Schaltstellungen, über welche sich entsprechende Betriebs- bzw. Nichtbetriebszustände jeweiliger Filtermodule implementieren lassen; mithin sind jeweilige Schaltstellungen jeweiligen Betriebs- bzw. Nichtbetriebszustände jeweiliger Filtermodule zugeordnet. Entsprechende Schaltstellungen der Schalteinrichtung können beispielsweise derart realisiert sein, dass das die Leitungsstruktur durchströmende Prozessgas in einer ersten beispielhaften Schaltstellung der Schalteinrichtung nur ein einziges in die Leitungsstruktur geschaltet angeordnetes Filtermodul durchströmt und in einer weiteren beispielhaften Schaltstellung der Schalteinrichtung wenigstens zwei, gegebenenfalls sämtliche, in die Leitungsstruktur geschaltet angeordnete Filtermodule durchströmt. Eine tatsächliche Filterung des Prozessgases ist nur mit wenigstens einem in die Leitungsstruktur geschaltet angeordneten und in einen Betriebszustand geschalteten Filtermodul möglich.

Durch die Möglichkeit der individuellen Schaltung der Filtermodule in jeweilige Betriebs- und Nichtbetriebszustände ist ein Betrieb der Filtereinrichtung auch bei einem Austausch einzelner Filtermodule, d. h. insbesondere Filtermodule mit einer, z. B. auf einen Sättigungszustand zurückzuführenden, eingeschränkten Filterleistung, oder einem Ausfall einzelner Filtermodule möglich. Eine Filterung des Prozessgases ist in diesem Fall über wenigstens ein weiterhin in der Leitungsstruktur geschaltet angeordnetes und in einen Betriebszustand geschaltetes Filtermodul gewährleistet. Um ein Filtermodul auszutauschen, ist dieses über die Schalteinrichtung in einen Nichtbetriebszustand zu schalten. Das in den Nichtbetriebszustand geschaltete Filtermodul ist von der die Leitungsstruktur durchströmenden Prozessgasströmung entkoppelt und kann ohne weiteres aus seiner in die Leitungsstruktur geschalteten Anordnung entnommen werden.

Der Betrieb der Vorrichtung muss damit nicht unterbrochen werden, wenn ein Filtermodul, z. B. bei Erreichen eines Sättigungszustands, auszutauschen ist bzw. ausgetauscht wird. Ein Austausch eines Filtermoduls kann prinzipiell sogar während des Betriebs der Vorrichtung, d. h. während der Durchführung eines additiven Bauvorgangs, erfolgen. Es liegt damit eine, insbesondere im Hinblick auf eine effiziente kontinuierliche Durchführung additiver Bauvorgänge, verbesserte Vorrichtung zur additiven Herstellung dreidimensionaler Objekte vor.

Die Schalteinrichtung kann als eine mehrere Ventileinheiten umfassende Ventileinrichtung ausgebildet sein oder eine solche umfassen. Die Ventileinheiten der Ventileinrichtung, welche über eine der Schalteinrichtung zugehörige Steuereinrichtung typischerweise einzeln ansteuerbar sind, sind jeweils einem in die Leitungsstruktur geschaltet angeordneten Filtermodul zuordenbar oder zugeordnet. Jede Ventileinheit ist in eine erste Schaltstellung bringbar, in welcher ein der jeweiligen Ventileinheit zugeordnetes Filtermodul von dem Prozessgas durchströmbar ist, und in eine zweite Schaltstellung bringbar, in welcher ein der jeweiligen Ventileinheit zugeordnetes Filtermodul nicht von dem Prozessgas durchströmbar ist. Die Schaltstellungen einer Ventileinheit sind sonach mit dem Betriebs- bzw. Nichtbetriebszustand eines der Ventileinheit zugeordneten Filtermoduls korreliert; die Schaltstellungen der Ventileinheit sind sonach dem Betriebs- bzw. dem Nichtbetriebszustand des Filtermoduls zugeordnet. Die Schaltstellungen der Schalteinrichtung lassen sich sonach über jeweilige Schaltstellungen der der Ventileinrichtung zugehörigen Ventileinheiten implementieren. Entsprechende Ventileinheiten können z. B. als Wegeventile ausgebildet sein bzw. solche umfassen.

Die Leitungsstruktur kann eine mehrere Anschlussschnittstellen umfassende Anschlusseinrichtung umfassen, wobei jeweilige Filtermodule über eine jeweilige Anschlussschnittstelle in die Leitungsstruktur geschaltet anordenbar sind. Eine jeweilige Anschlussschnittstelle kann sonach eingerichtet sein, ein Filtermodul in die Leitungsstruktur geschaltet anzuordnen. Jeder Anschlussschnittstelle ist typischerweise eine Ventileinheit zugeordnet, mithin ist jede Anschlussschnittstelle typischerweise mit einer Ventileinheit ausgestattet ist.

Auch ein jeweiliges Filtermodul umfasst Anschlussschnittstellen, über welche es bedarfsweise an jeweilige Anschlussschnittstellen der Anschlusseinrichtung der Leitungsstruktur anschließbar oder angeschlossen ist. Die leitungsstrukturseitigen Anschlussschnittstellen können z. B. Flanschbereiche umfassende Anschlussstutzen umfassen. Auch die filtermodulseitigen Anschlussschnittstellen können z. B. Flanschbereiche umfassende Anschlussstutzen umfassen. Die leitungsstrukturseitigen wie auch die filtermodulseitigen Anschlussschnittstellen sind zweckmäßig gleich (identisch) konfiguriert; dies vereinfacht den bedarfsweisen Austausch bzw. einen weiter unten erläuterten bedarfsweisen Wechsel jeweiliger Filtermodule.

Jeweilige leitungsstrukturseitige bzw. filtermodulseitige Anschlussschnittstellen können geeignete Befestigungs- und Dichtungselemente umfassen. Die Anschlussschnittstellen können, wie erwähnt, als Flanschbereiche umfassende Anschlussstutzen ausgebildet sein. Jeweilige Anschlussstutzen bzw. Flanschbereiche umfassen typischerweise Befestigungs- und Dichtungselemente. Jeweilige Befestigungselemente können zur Befestigung eines Filtermoduls in einer unveränderlichen lagefesten Positionierung an den leitungsstrukturseitigen Anschlussschnittstellen eingerichtet sein. Ein jeweiliges Befestigungselement kann eine form- und/oder kraftschlüssige Befestigung eines Filtermoduls an einer leitungsstrukturseitigen Anschlussschnittstelle ermöglichen. Ein eine form- bzw. kraftschlüssige Befestigung eines Filtermoduls an einer leitungsstrukturseitigen Anschlussschnittstelle ermöglichendes Befestigungselement kann z. B. eine Befestigungs- bzw. Spannschelle sein. Entsprechende Befestigungselemente können demnach z. B. teil- oder vollringartige bzw. -förmige Befestigungs- bzw. Spannschellen sein bzw. umfassen. Entsprechende Dichtungselemente können z. B. Dichtungsringe sein bzw. umfassen.

Die Vorrichtung kann eine der Filtereinrichtung zugeordnete Erfassungseinrichtung umfassen, welche zur, insbesondere automatisierbaren bzw. automatisierten, Erfassung einer einen aktuellen und/oder künftigen Sättigungsgrad wenigstens eines in die Leitungsstruktur geschaltet angeordneten Filtermoduls beschreibenden Sättigungsinformation eingerichtet ist. Über die Erfassungseinrichtung ist es sonach möglich, einen aktuellen und/oder künftigen Sättigungsgrad eines Filtermoduls zu erfassen, sodass ein gegebenenfalls erforderlicher Austausch eines Filtermoduls früh- bzw. rechtzeitig erfolgen kann.

Die Sättigungsinformation kann einen den Sättigungsgrad bzw. -zustand eines Filtermoduls beschreibenden sättigungsgradabhängigen Parameter beschreiben. Bei einem entsprechenden Paramater kann es sich z. B. um das sättigungsgradabhängige Gewicht des Filtermoduls bzw. eine sättigungsgradabhängige Gewichtsänderung des Filtermoduls, den sättigungsgradabhängigen Druck des Prozessgases bzw. den sättigungsgradabhängigen Differenzdruck (Druckdifferenz) des Prozessgases zwischen einem eine Einströmseite bildenden Einströmabschnitt eines Filtermoduls und einem eine Ausströmseite bildenden Ausströmabschnitt des Filtermoduls, die sättigungsgradabhängige Strömungsgeschwindigkeit des Prozessgases, insbesondere im Vergleich zu der Leistung einer die Prozessgasströmung erzeugenden vorrichtungsseitigen Strömungserzeugungseinrichtung, insbesondere einer Pumpeneinrichtung, durch ein Filtermodul bzw. die sättigungsgradabhängige Strömungsgeschwindigkeitsdifferenz zwischen einem eine Einströmseite bildenden Einströmabschnitt und einem eine Ausströmseite bildenden Ausströmabschnitt des Filtermoduls, oder die sättigungsgradabhängige Zusammensetzung des durch ein Filtermodul strömenden bzw. des aus dem Filtermodul ausströmenden Prozessgases handeln.

Es wurde erwähnt, dass der Filterkörperaufnahmeraum eines Filtermodulgehäuses eines jeweiligen Filtermoduls zur Aufnahme (nur) einer definierten Anzahl geometrisch definiert konfigurierter Filterkörper eingerichtet sein kann. Mit anderen Worten kann ein jeweiliger Filterkörperaufnahmeraum im Hinblick auf die darin aufnehmbaren bzw. aufgenommenen Filterkörper derart geometrisch definiert konfiguriert sein, d. h. derart geometrisch-konstruktiv bemessen sein, dass in diesem nur die für das jeweilige Filtermodul definierte Anzahl geometrisch definiert konfigurierter Filterkörper aufgenommen werden kann.

Beispielsweise kann ein Filtermodulgehäuse bzw. ein Filterkörperaufnahmeraum eine (hohl)zylindrische Grundform mit gegebenen Abmessungen, d. h. einem gegebenen Außen- und Innenradius sowie einer gegebenen Höhe, aufweisen; ein entsprechender Filterkörperaufnahmeraum ist als Zylinder bzw. Hohlzylinder mit gegebenen Abmessungen geometrisch definiert konfiguriert, in welchem aufgrund seiner geometrisch definierten Konfiguration nur eine definierte Anzahl geometrisch definiert konfigurierter Filterkörper, d. h. Filterkörper mit einer ring- bzw. ringsegmentförmigen Grundform, deren Außen- und Innenradius sowie deren Höhe bzw. Gesamthöhe auf die Abmessungen des Filterkörperaufnahmeraums abgestimmt sind, aufgenommen werden kann bzw. können. Die Ausführungen gelten selbstverständlich für Filtermodulgehäuse bzw. ein Filterkörperaufnahmeräume mit einer anderen als einer (hohl)zylindrischen Grundform analog.

Ein jeweiliger Filterkörperaufnahmeraum kann daher ein räumlich definiertes Filterkörperaufnahmeraumvolumen ("Volumen") aufweisen, in welchem (nur) die jeweils definierte Anzahl geometrisch definiert konfigurierter Filterkörper aufnehmbar bzw. aufgenommen ist. Unter einer definierten Anzahl geometrisch definiert konfigurierter Filterkörper ist auch eine Anzahl von eins zu verstehen, d. h. in einem Filterkörperaufnahmeraum kann auch nur ein (einziger) geometrisch definiert konfigurierter Filterkörper aufnehmbar bzw. aufgenommen sein.

Die die Filtermodulgehäuse der Filtermodule können sich in der jeweils definierten Anzahl der in den jeweiligen geometrisch definiert konfigurierten filtermodulgehäuseseitig umfassten Filterkörperaufnahmeräumen aufnehmbaren bzw. aufgenommenen geometrisch definiert konfigurierten Filterkörper unterscheiden. Die Filterkörperaufnahmeräume der jeweiligen Filtermodulgehäuse können sich also in ihren jeweiligen Filterkörperaufnahmevolumina unterscheiden, wobei in jedem Filterkörperaufnahmeraum nur eine definierte Anzahl geometrisch definiert konfigurierter Filterkörper aufnehmbar ist. Selbstverständlich ist es jedoch auch denkbar, dass sich die Filtermodulgehäuse der Filtermodule sich in der jeweils definierten Anzahl der in den jeweiligen geometrisch definiert konfigurierten filtermodulgehäuseseitig umfassten Filterkörperaufnahmeräumen aufnehmbaren bzw. aufgenommenen geometrisch definiert konfigurierten Filterkörper nicht unterscheiden. Die Filterkörperaufnahmeräume der jeweiligen Filtermodulgehäuse können also in ihren jeweiligen Filterkörperaufnahmevolumina gleich sein, wobei in jedem Filterkörperaufnahmeraum die gleiche definierte Anzahl geometrisch definiert konfigurierter Filterkörper aufnehmbar ist.

Ausgehend von Filterkörpern einer bestimmten geometrisch definierten Konfiguration kann ein erstes Filtermodul einen Filterkörperaufnahmeraum umfassen, in welchem eine erste Anzahl solcher Filterkörper aufnehmbar bzw. aufgenommen ist, und ein zweites (bzw. weiteres) Filtermodul einen Filterkörperaufnahmeraum umfassen, in welchem eine von der der ersten Anzahl unterschiedliche zweite Anzahl solcher Filterkörper aufnehmbar bzw. aufgenommen ist. Beispielsweise kann ein erstes Filtermodul einen Filterkörperaufnahmeraum umfassen, in welchem nur ein einziger solcher Filterkörper aufnehmbar bzw. aufgenommen ist, ein zweites Filtermodul einen Filterkörperaufnahmeraum umfassen, in welchem im Hinblick auf den Filterkörperaufnahmeraum des ersten Filtermoduls wenigstens ein weiterer solcher Filterkörper aufnehmbar bzw. aufgenommen ist, ein drittes Filtermodul einen Filterkörperaufnahmeraum umfassen, in welchem im Hinblick auf den Filterkörperaufnahmeraum des zweiten Filtermoduls wenigstens ein weiterer solcher Filterkörper aufnehmbar bzw. aufgenommen ist, und so fort.

Sofern in einem Filterkörperaufnahmeraum mehrere Filterkörper aufgenommen sind, können diese z. B. stapelartig übereinander angeordnet sein. Die Filterkörper können dabei miteinander fluchtend angeordnet sein. Sind die Filterkörper ringartig bzw. - förmig, im Allgemeinen mit einem filterkörperseitig definierten Innenraum, ausgebildet, können die jeweiligen filterkörperseitig definierten Innenräume also miteinander fluchten. Alternativ zu einer stapelartigen Anordnung jeweiliger Filterkörper übereinander, ist auch eine reihenartige Anordnung jeweiliger Filterkörper nebeneinander denkbar.

Wie erwähnt, umfasst jedes Filtermodul (zwei) Anschlussschnittstellen, über welche es bedarfsweise an definierte leitungsstrukturseitige Anschlussschnittstellen der vorrichtungsseitigen Leitungsstruktur anschließbar oder angeschlossen ist. Die der Filtereinrichtung zugehörigen Filtermodule können sonach - unabhängig von ihrem jeweiligen Sättigungsgrad - auch bedarfsweise ausgewechselt werden, um für einen bestimmten additiven Bauvorgang einen effizienten Betrieb der Filtereinrichtung zu gewährleisten. Es liegt damit eine Filtereinrichtung mit einer variabel anpassbaren Filtergröße vor, welche für einen effizienten Betrieb der Filtereinrichtung zweckmäßig sein kann, als bedarfsweise Filtermodule mit einem im Vergleich großen oder einem im Vergleich kleinen maximal filterbaren Filtervolumen verwendet werden können. Die Filtergröße ist durch den Einsatz unterschiedlicher Filtermodule bzw. durch die unterschiedliche Anzahl der in den Filterkörperaufnahmeräumen der Filtermodulgehäuse der jeweiligen Filtermodule aufgenommenen Filterkörper bedingt.

An den leitungsstrukturseitigen Anschlussschnittstellen sind typischerweise nur Filtermodulgehäuse einer bestimmten geometrisch definierten Konfiguration, insbesondere einer bestimmten Länge, anschließbar bzw. anordenbar; mithin können an den leitungsstrukturseitigen Anschlussschnittstellen typischerweise nur Filtermodulgehäuse einer bestimmten geometrisch definierten Konfiguration, insbesondere einer bestimmten Länge, angeschlossen werden. Die der Filtereinrichtung zugehörigen Filtermodule weisen daher zweckmäßig eine entsprechende geometrisch definierte Konfiguration, insbesondere eine entsprechende Länge, auf. Die geometrisch definierte Konfiguration der Filtermodule ermöglicht insbesondere eine(n) passgenaue(n) Anschluss bzw. eine passgenaue Anordnung der Filtermodule an den leitungsstrukturseitigen Anschlussbereichen.

Um eine (positions)stabile Anordnung jeweiliger Filterkörper in jeweiligen filtermodulgehäuseseitig umfassten Filterkörperaufnahmeräumen zu gewährleisten, können der oder die in einem jeweiligen Filterkörperaufnahmeraum aufgenommenen Filterkörper mit einem Klemm- bzw. Presssitz in dem jeweiligen Filterkörperaufnahmeraum aufgenommen sein. Der Klemm- bzw. Presssitz kann durch ein gewisses Übermaß der in einem jeweiligen Filterkörperaufnahmeraum aufgenommenen Filterkörper gegenüber dem Filterkörperaufnahmeraum hergestellt sein.

Jedes Filtermodul kann eine filtermodulgehäuseseitig angeordnete oder ausgebildete Verschlusseinrichtung umfassen. Ein jeweiliges Filtermodulgehäuse kann eine über die jeweilige Verschlusseinrichtung verschließbare, eine Zugangsmöglichkeit in den jeweiligen Filterkörperaufnahmeraum bildende Zugangsöffnung aufweisen. Über das Zusammenwirken der Verschlusseinrichtung und der Zugangsöffnung ist ein gegebenenfalls, d. h. z. B. zu Servicezwecken, erforderlicher Wechsel eines oder mehrerer in einem jeweiligen Filterkörperaufnahmeraum aufgenommener Filterkörper möglich.

Die Verschlusseinrichtung kann ein, gegebenenfalls bewegbar an dem Filtermodulgehäuse angeordnetes oder ausgebildetes, deckelartiges Verschlusselement umfassen. Das Verschlusselement kann zwischen einer Offenstellung, in welcher das Verschlusselement derart relativ zu der Zugangsöffnung bewegt ist, dass ein Zugang in den Filterkörperaufnahmeraum möglich ist, und einer Schließstellung, in welcher das Verschlusselement derart relativ zu der Zugangsöffnung bewegt ist, dass ein Zugang in den Filterkörperaufnahmeraum nicht möglich ist, (schwenk)bewegbar gelagert sein. Das Verschlusselement ist in der Schließstellung typischerweise derart relativ zu der Zugangsöffnung bewegt, d. h. insbesondere gegen die Zugangsöffnung bewegt, dass der Filterkörperaufnahmeraum fluiddicht verschlossen ist.

In jedem Filtermodulgehäuse kann eine von dem Prozessgas bzw. einer Prozessgasströmung durchströmbare bzw. im Betrieb der Filtereinrichtung durchströmte Strömungskanalstruktur ausgebildet sein. Die Strömungskanalstruktur kann einen den, insbesondere rohrförmigen, eine Einströmseite bildenden Einströmabschnitt zum Einströmen eines zu filternden Prozessgases bzw. einer zu filternden Prozessgasströmung in das Filtermodul umfassenden ersten Strömungskanalstrukturabschnitt und einen den, insbesondere rohrförmigen, eine Ausströmseite bildenden Ausströmabschnitt zum Ausströmen eines gefilterten Prozessgases bzw. einer gefilterten Prozessgasströmung aus dem Filtermodul umfassenden zweiten Strömungskanalstrukturabschnitt umfassen. Die beiden Strömungskanalstrukturabschnitte kommunizieren miteinander. Der oder die in dem jeweiligen filtermodulgehäuseseitig umfassten Filterkörperaufnahmeraum aufgenommenen Filterkörper sind zwischen dem ersten und dem zweiten Strömungskanalstrukturabschnitt angeordnet.

Die Erfindung ist anhand von Ausführungsbeispielen in den Zeichnungsfiguren näher erläutert. Dabei zeigt die
- Fig. 1: eine Prinzipdarstellung einer Vorrichtung gemäß einem Ausführungsbeispiel; und
- Fig. 2, 3: je eine Prinzipdarstellung eines Filtermoduls gemäß einem Ausführungsbeispiel.

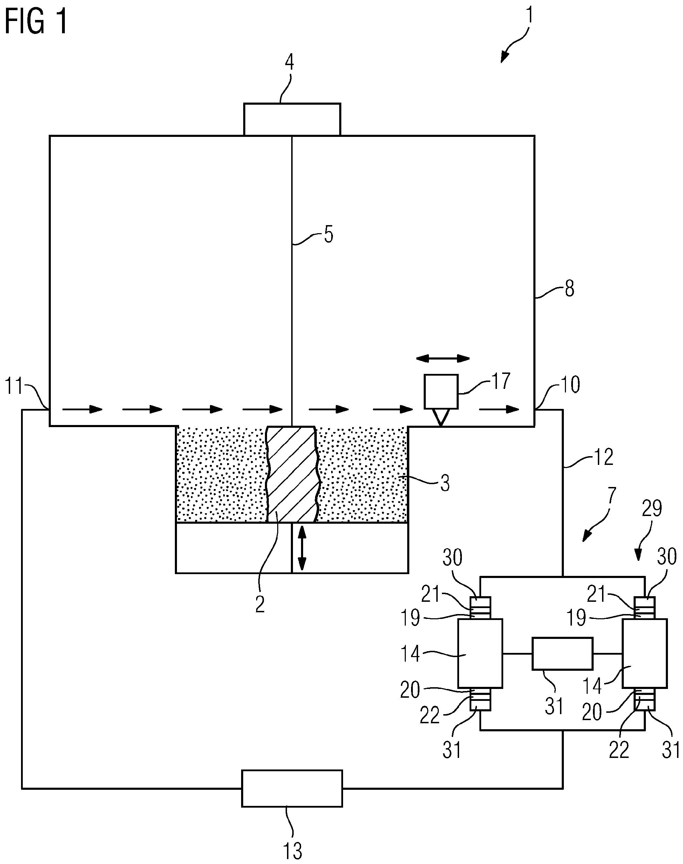

Fig. 1 zeigt eine Prinzipdarstellung einer Vorrichtung 1 gemäß einem Ausführungsbeispiel. In Fig. 1 ist nur der für die Erläuterung des nachfolgend beschriebenen Prinzips relevante Ausschnitt der Vorrichtung 1 in einer geschnittenen Ansicht gezeigt.

Die Vorrichtung 1 dient der additiven Herstellung dreidimensionaler Objekte 2, d. h. insbesondere technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial 3, d. h. z. B. eines Metallpulvers, vermittels eines Laserstrahls 5. Die selektive Verfestigung jeweiliger zu verfestigender Baumaterialschichten erfolgt auf Grundlage von objektbezogenen Baudaten. Entsprechende Baudaten beschreiben die geometrische bzw. geometrisch-konstruktive Gestalt des jeweils additiv herzustellenden Objekts 2 und können beispielsweise "geslicte" CAD-Daten des herzustellenden Objekts 2 beinhalten. Die Vorrichtung 1 kann als LaserCUSING®-Vorrichtung, d. h. als Vorrichtung zur Durchführung selektiver Laserschmelzverfahren, ausgebildet sein.

Die Vorrichtung 1 umfasst die zur Durchführung additiver Bauvorgänge erforderlichen Funktionskomponenten. Hierzu zählt eine Beschichtungseinrichtung 17, welche zur Ausbildung selektiv zu verfestigender Baumaterialschichten (in der Bauebene der Vorrichtung 1) eingerichtet ist, und eine Belichtungseinrichtung 4, welche zur selektiven Belichtung selektiv zu verfestigender Baumaterialschichten (in der Bauebene der Vorrichtung 1) eingerichtet ist. Die Beschichtungseinrichtung 17 umfasst mehrere Bestandteile (nicht näher gezeigt), nämlich ein ein, insbesondere klingenförmiges, Beschichtungswerkzeug umfassendes Beschichtungselement sowie eine Führungseinrichtung zur Führung des Beschichtungselements entlang einer definierten Bewegungsbahn. Auch die Belichtungseinrichtung 4 umfasst mehrere Bestandteile (nicht näher gezeigt) nämlich eine Strahlerzeugungseinrichtung zur Erzeugung des Laserstrahls 5, eine Strahlablenkeinrichtung zur Ablenkung des von der Strahlerzeugungseinrichtung erzeugten Laserstrahls 5 auf einen zu belichtenden Bereich einer selektiv zu verfestigenden Baumaterialschicht sowie diverse optische Elemente, wie z. B. Objektivelemente, Linsenelemente, etc., welche typischerweise zwischen der Strahlerzeugungseinrichtung und der Strahlablenkeinrichtung angeordnet sind.

Die genannten Funktionskomponenten der Vorrichtung 1 sind an oder in einer Prozesskammer 8 der Vorrichtung 1 angeordnet oder ausgebildet. Die Prozesskammer 8 ist inertisiert, d. h. mit einem Inertgas, wie z. B. Argon, Stickstoff, etc., befüllt.

Die Vorrichtung 1 umfasst weiterhin eine Leitungsstruktur 12, welche von einem im Rahmen der Durchführung additiver Bauvorgänge in der Prozesskammer 8 entstehenden, insbesondere prozessbedingt entstehende Verunreinigungen enthaltenden, Prozessgas 9 durchströmbar bzw. durchströmt ist. Die Strömung des Prozessgases 9 durch die Prozesskammer 8, d. h. die Prozessgasströmung, ist durch die Pfeile innerhalb der Prozesskammer 8 angedeutet. Bei entsprechenden Verunreinigungen in dem Prozessgas 9 handelt es sich insbesondere um prozessbedingte entstehende Rauch- oder Schmauchpartikel und/oder um nicht verfestigte Baumaterialpartikel ("Schweißspritzer"). Die Leitungsstruktur 12 ist mit einem Leitungselement(abschnitt) an einen, insbesondere eine Ausströmöffnung umfassenden, Ausströmbereich 10 der Prozesskammer 8, über welchen (zu filterndes) Prozessgas 9 aus der Prozesskammer 8 in die Leitungsstruktur 12 strömen kann bzw. strömt, und mit einem weiteren Leitungselement(abschnitt) an einen, insbesondere eine Einströmöffnung umfassenden, Einströmbereich 11 der Prozesskammer 8, über welchen (gefiltertes) Prozessgas 9 aus der Leitungsstruktur 12 zurück in die Prozesskammer 8 strömen kann, angeschlossen. Ersichtlich ist durch die Prozesskammer 8 und die Leitungsstruktur 12 ein geschlossener Strömungskreislauf gebildet; das Prozessgas 9 strömt zwischen der Prozesskammer 8 und der Leitungsstruktur 12 sonach in einem geschlossenen Strömungskreislauf.

In die Leitungs- bzw. Rohrstruktur 12 ist eine Filtereinrichtung 7 und eine Pumpeneinrichtung 13, welche zur Erzeugung einer die Strömung des Prozessgases 9 durch die Leitungsstruktur 12, d. h. auch durch die Filtereinrichtung 7, ermöglichenden Saugströmung eingerichtet ist, geschaltet.

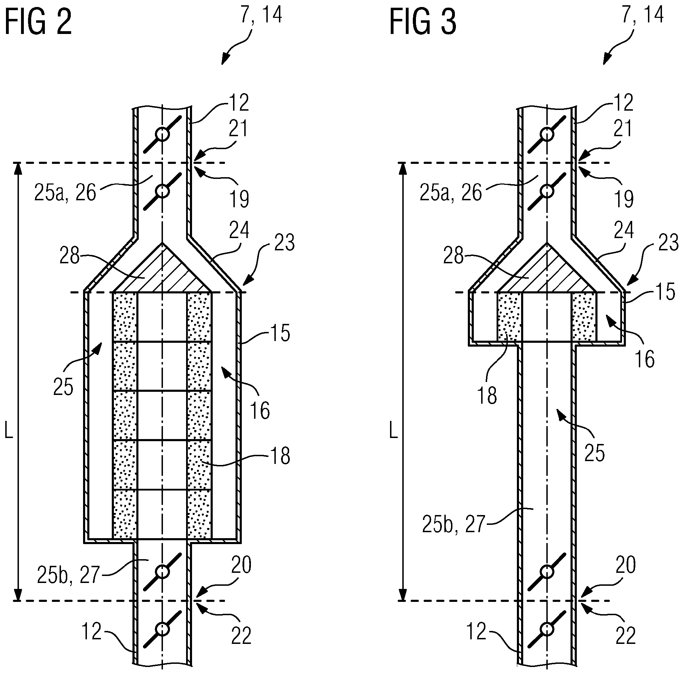

Die Filtereinrichtung 7 ist zur Filterung des im Rahmen der Durchführung additiver Bauvorgänge in einer Prozesskammer 8 entstehenden, insbesondere prozessbedingt entstehende Verunreinigungen enthaltenden, Prozessgases 9 eingerichtet und umfasst mehrere, d. h. wenigstens zwei, Filtermodule 14. Jedes Filtermodul 14 umfasst ein Filtermodulgehäuse 15. Jedes Filtermodulgehäuse 15 umfasst einen eine Einströmseite bildenden Einströmabschnitt 26 und einen eine Ausströmseite bildenden Ausströmabschnitt 27 und einen zwischen dem Einströmabschnitt 26 und dem Ausströmabschnitt 27 angeordneten oder ausgebildeten geometrisch definiert konfigurierten Filterkörperaufnahmeraum 16 (vgl. Fig. 2, 3). Ein jeweiliges Filtermodul 14 kann eine vorkonfigurierbare oder vorkonfigurierte, gesondert handhabbare Baugruppe bilden.

Die Filtermodule 14 sind (bedarfsweise) auswechselbar in die Leitungsstruktur 12 geschaltet anordenbar bzw. angeordnet, d. h. diese lassen sich also in der Leitungsstruktur 12 anordnen, dass diese, wie in Fig. 1 gezeigt, in die Leitungsstruktur 12 geschaltet sind. Ein in die Leitungsstruktur 12 geschaltet angeordnetes Filtermodul 14 ist von dem die Leitungsstruktur 12 durchströmenden Prozessgas 9 durchströmbar und ermöglicht grundsätzlich eine Filterung des Prozessgases 9.

Die in die Leitungsstruktur 12 geschaltet angeordneten Filtermodule 14 sind individuell, d. h. einzeln, gruppenweise oder gesamt, über eine der Filtereinrichtung 7 zugeordnete Schalteinrichtung 29 in einen jeweiligen Betriebszustand, in welchem das jeweilige Filtermodul 14 von dem Prozessgas 9 durchströmbar in die Leitungsstruktur 12 geschaltet ist, und in einen jeweiligen Nichtbetriebszustand, in welchem das jeweilige Filtermodul 14 nicht von dem Prozessgas 9 durchströmbar in die Leitungsstruktur 12 geschaltet ist, schaltbar. Die Schalteinrichtung 29 umfasst sonach mehrere, d. h. wenigstens zwei, Schaltstellungen, über welche sich entsprechende Betriebs- bzw. Nichtbetriebszustände jeweiliger Filtermodule 14 implementieren lassen. Entsprechende Schaltstellungen der Schalteinrichtung 29 können beispielsweise derart realisiert sein, dass das Prozessgas 9 in einer ersten beispielhaften Schaltstellung nur ein einziges Filtermodul 14 durchströmt und in einer weiteren beispielhaften Schaltstellung wenigstens zwei, gegebenenfalls sämtliche, in die Filtermodule 14 durchströmt. Eine tatsächliche Filterung des Prozessgases 9 ist nur mit wenigstens einem in die Leitungsstruktur 12 geschaltet angeordneten und in einen Betriebszustand geschalteten Filtermodul 14 möglich.

Durch die Möglichkeit der individuellen Schaltung der Filtermodule 14 in jeweilige Betriebs- und Nichtbetriebszustände ist ein Betrieb der Filtereinrichtung 7 auch bei einem Austausch einzelner Filtermodule 14, d. h. insbesondere Filtermodule 14 mit einer, z. B. auf einen Sättigungszustand zurückzuführenden, eingeschränkten Filterleistung, oder einem Ausfall einzelner Filtermodule 14 möglich. Eine Filterung des Prozessgases 9 ist in diesem Fall über wenigstens ein weiterhin in der Leitungsstruktur 12 geschaltet angeordnetes und in einen Betriebszustand geschaltetes Filtermodul 14 gewährleistet. Um ein Filtermodul 14 auszutauschen, ist dieses über die Schalteinrichtung 29 in einen Nichtbetriebszustand zu schalten, wobei es von der die Leitungsstruktur 12 durchströmenden Prozessgasströmung entkoppelt wird, sodass es ohne weiteres aus seiner in die Leitungsstruktur 12 geschalteten Anordnung entnommen werden.

Die Schalteinrichtung 29 ist als eine mehrere, z. B. als Wegeventile ausgebildete, Ventileinheiten 30 (nur angedeutet dargestellt) umfassende Ventileinrichtung (nicht näher bezeichnet) ausgebildet. Jede Ventileinheit 30 ist jeweils einem in die Leitungsstruktur 12 geschaltet angeordneten Filtermodul 14 zuordenbar bzw. zugeordnet und über eine der Schalteinrichtung 29 zugehörige Steuereinrichtung (nicht gezeigt) einzeln ansteuerbar. Jede Ventileinheit 30 ist in eine erste Schaltstellung bringbar, in welcher ein der jeweiligen Ventileinheit 30 zugeordnetes Filtermodul 14 von dem Prozessgas 9 durchströmbar ist, und in eine zweite Schaltstellung bringbar, in welcher ein der jeweiligen Ventileinheit 30 zugeordnetes Filtermodul 14 nicht von dem Prozessgas 9 durchströmbar ist. Die Schaltstellungen einer Ventileinheit 30 sind sonach mit dem Betriebs- bzw. Nichtbetriebszustand des der Ventileinheit 30 zugeordneten Filtermoduls 14 korreliert, d. h. dem Betriebs- bzw. dem Nichtbetriebszustand des jeweiligen Filtermoduls 14 zugeordnet. Die Schaltstellungen der Schalteinrichtung 29 lassen sich sonach über jeweilige Schaltstellungen der Ventileinheiten 30 implementieren.

Die Leitungsstruktur 12 umfasst eine mehrere Anschlussschnittstellen 21, 22 umfassende Anschlusseinrichtung (nicht näher bezeichnet). Ersichtlich sind die Filtermodule 14 über eine jeweilige Anschlussschnittstelle 21, 22 in die Leitungsstruktur 12 geschaltet angeordnet. Eine jeweilige Anschlussschnittstelle 21, 22 ist sonach eingerichtet, ein Filtermodul 14 in die Leitungsstruktur 12 geschaltet anzuordnen. Jeder Anschlussschnittstelle 21, 22 ist eine Ventileinheit 30 zugeordnet, mithin ist jede Anschlussschnittstelle 21, 22 mit einer Ventileinheit 30 ausgestattet.

Auch die Filtermodule 14 umfassen jeweils Anschlussschnittstellen 19, 20, über welche diese bedarfsweise an jeweilige Anschlussschnittstelle 21, 22 der Anschlusseinrichtung der Leitungsstruktur 12 anschließbar oder angeschlossen sind. Die leitungsstrukturseitigen Anschlussschnittstellen 21, 22 können Flanschbereiche umfassende Anschlussstutzen umfassen. Auch die filtermodulseitigen Anschlussschnittstellen 19, 20 können Flanschbereiche umfassende Anschlussstutzen umfassen. Die leitungsstrukturseitigen wie auch die filtermodulseitigen Anschlussschnittstellen sind gleich (identisch) konfiguriert; dies vereinfacht den bedarfsweisen Austausch bzw. einen weiter unten erläuterten bedarfsweisen Wechsel der Filtermodule 14.

Die Vorrichtung 1 kann eine der Filtereinrichtung 7 zugeordnete Erfassungseinrichtung 31 umfassen, welche zur, insbesondere automatisierbaren bzw. automatisierten, Erfassung einer einen aktuellen und/oder künftigen Sättigungsgrad jeweiliger in die Leitungsstruktur 12 geschaltet angeordneter Filtermodule 14 beschreibenden Sättigungsinformation eingerichtet ist. Über die Erfassungseinrichtung 31 ist es möglich, einen aktuellen und/oder künftigen Sättigungsgrad eines jeden Filtermoduls 14 zu erfassen, sodass ein gegebenenfalls erforderlicher Austausch eines Filtermoduls 14 früh- bzw. rechtzeitig erfolgen kann.

Die Sättigungsinformation kann einen den Sättigungsgrad bzw. -zustand eines Filtermoduls 14 beschreibenden sättigungsgradabhängigen Parameter beschreiben. Bei einem entsprechenden Paramater kann es sich z. B. um das sättigungsgradabhängige Gewicht des Filtermoduls 14 bzw. eine sättigungsgradabhängige Gewichtsänderung des Filtermoduls 14, den sättigungsgradabhängigen Druck des Prozessgases 9 bzw. den sättigungsgradabhängigen Differenzdruck (Druckdifferenz) des Prozessgases 9 zwischen dem Einströmabschnitt 26 eines Filtermoduls 14 und dem Ausströmabschnitt 27 des Filtermoduls 14, die sättigungsgradabhängige Strömungsgeschwindigkeit des Prozessgases 9, insbesondere im Vergleich zu der Leistung der die Prozessgasströmung erzeugenden Pumpeneinrichtung 13, durch ein Filtermodul 14 bzw. die sättigungsgradabhängige Strömungsgeschwindigkeitsdifferenz zwischen dem Einströmabschnitt 26 und dem Ausströmabschnitt 27 des Filtermoduls 14, oder die sättigungsgradabhängige Zusammensetzung des durch ein Filtermodul 14 strömenden bzw. des aus dem Filtermodul 14 ausströmenden Prozessgases 9 handeln.

Fig. 2, 3 zeigen je eine Prinzipdarstellung eines Filtermoduls 14 gemäß einem Ausführungsbeispiel in einer (längs)geschnittenen Ansicht.

Anhand der Fig. 2, 3 ist ersichtlich, dass der Filterkörperaufnahmeraum 16 eines Filtermoduls 14 zur Aufnahme (nur) einer definierten Anzahl geometrisch definiert konfigurierter Filterkörper 18 eingerichtet sein kann. Ein jeweiliger Filterkörperaufnahmeraum 16 kann im Hinblick auf die darin aufnehmbaren bzw. aufgenommenen Filterkörper 18 derart geometrisch definiert konfiguriert sein, d. h. derart geometrisch-konstruktiv bemessen sein, dass in diesem nur die für das jeweilige Filtermodul 14 definierte Anzahl geometrisch definiert konfigurierter Filterkörper 18 aufgenommen werden kann.

Die in den Fig. 2, 3 gezeigten Filtermodule 14 weisen je ein Filtermodulgehäuse 15 bzw. einen Filterkörperaufnahmeraum 16 mit einer (hohl)zylindrischen Grundform mit gegebenen Abmessungen, d. h. einem gegebenen Außen- bzw. Innenradius sowie einer gegebenen Höhe, auf. Die jeweiligen Filterkörperaufnahmeräume 16 sind durch ihre gegebenen Abmessungen geometrisch definiert konfiguriert. Aufgrund deren jeweiliger geometrisch definierter Konfiguration kann in den Filterkörperaufnahmeräumen 16 jeweils nur eine definierte Anzahl geometrisch definiert konfigurierter Filterkörper 18, d. h. in dem Ausführungsbeispiel Filterkörper 18 mit einer ringförmigen Grundform, deren Außen- und Innenradius sowie deren Höhe bzw. Gesamthöhe auf die Abmessungen des jeweiligen Filterkörperaufnahmeraums 16 abgestimmt sind, aufgenommen werden.

In dem Filterkörperaufnahmeraum 16 des in Fig. 2 gezeigten Filtermoduls 14 können beispielhaft fünf Filterkörper 18 aufgenommen werden, in dem Filterkörperaufnahmeraum 16 des in Fig. 3 gezeigten Filtermoduls 14 kann dagegen beispielhaft nur ein (einziger) Filterkörper 18 aufgenommen werden.

Die jeweiligen Filterkörperaufnahmeräume 16 weisen daher ein räumlich definiertes Filterkörperaufnahmeraumvolumen auf, in welchem (nur) die jeweils definierte Anzahl geometrisch definiert konfigurierter Filterkörper 18 aufnehmbar bzw. aufgenommen ist. Unter einer definierten Anzahl geometrisch definiert konfigurierter Filterkörper ist, wie sich aus Fig. 3 ergibt, auch eine Anzahl von eins zu verstehen, d. h. in einem Filterkörperaufnahmeraum 16 kann auch nur ein (einziger) geometrisch definiert konfigurierter Filterkörper 18 aufnehmbar bzw. aufgenommen sein. Gegebenenfalls wäre es auch denkbar, in dem in Fig. 2 gezeigten Ausführungsbeispiel einen einzigen länglichen Filterkörper 18 anzuordnen, dessen Höhe der Gesamthöhe der fünf einzelnen Filterkörper 18 entspricht. Der längliche Filterkörper 18 weist aufgrund seiner im Vergleich größeren Höhe eine andere geometrisch definierte Konfiguration als die einzelnen Filterkörper 18 auf.

Die Filtermodulgehäuse 15 der in den Fig. 2, 3 gezeigten Filtermodule 14 unterscheiden sich sonach in der jeweils definierten Anzahl der in den jeweiligen geometrisch definiert konfigurierten filtermodulgehäuseseitig umfassten Filterkörperaufnahmeräumen 16 aufnehmbaren bzw. aufgenommenen geometrisch definiert konfigurierten Filterkörper 18. Die Filterkörperaufnahmeräume 16 der jeweiligen Filtermodulgehäuse 15 unterscheiden sich also in ihren jeweiligen Filterkörperaufnahmevolumina, wobei, wie erwähnt, in jedem Filterkörperaufnahmeraum 16 nur eine definierte Anzahl geometrisch definiert konfigurierter Filterkörper 18 aufnehmbar ist.

Anhand von Fig. 2 ist ersichtlich, dass, sofern in einem Filterkörperaufnahmeraum 16 mehrere Filterkörper 18 aufgenommen sind, diese stapelartig übereinander angeordnet sein können. Die hier ringförmigen Filterkörper 18 sind dabei miteinander fluchtend angeordnet; die jeweiligen filterkörperseitig definierten Innenräume fluchten miteinander. Um eine (positions)stabile Anordnung der Filterkörper 18 in jeweiligen Filterkörperaufnahmeräumen 16 zu gewährleisten, sind die Filterkörper 18 mit einem Klemm- bzw. Presssitz in den jeweiligen Filterkörperaufnahmeräumen 16 aufgenommen.

Anhand der Fig. 2, 3 sind weiter die Anschlussschnittstellen 19, 20 eines Filtermoduls 14 ersichtlich, über welche das Filtermodul 14 bedarfsweise an einen jeweilige leitungsstrukturseitige Anschlussschnittstellen 21, 22 anschließbar bzw. angeschlossen ist. Die leitungsstrukturseitigen Anschlussschnittstelle 21, 22 können Flanschbereiche umfassende Anschlussstutzen (nicht näher bezeichnet) umfassen. Die Filtermodule 14 können sonach bedarfsweise ausgewechselt werden, um für einen bestimmten additiven Bauvorgang einen effizienten Betrieb der Filtereinrichtung 7 zu gewährleisten. Es liegt damit eine Filtereinrichtung 7 mit einer variabel anpassbaren Filtergröße vor. Die Filtergröße ist durch den Einsatz unterschiedlicher Filtermodule 14 bzw. durch die unterschiedliche Anzahl der in den Filterkörperaufnahmeräumen 16 der Filtermodulgehäuse 15 der jeweiligen Filtermodule 14 aufgenommenen Filterkörper 18 bedingt.

Jeweilige filtermodulseitige Anschlussschnittstellen 19, 20 umfassen geeignete Befestigungs- und Dichtungselemente (nicht gezeigt). Auch jeweilige filtermodulseitige Anschlussschnittstellen 19, 20 können als Flanschbereiche umfassende Anschlussstutzen mit entsprechenden Befestigungs- und Dichtungselementen ausgebildet sein. Jeweilige Befestigungselemente können zur Befestigung eines Filtermoduls 14 in einer unveränderlichen lagefesten Positionierung an den vorrichtungsseitigen Anschlussbereichen 21, 22 eingerichtet sein. Ein Befestigungselement kann z. B. eine form- und/oder kraftschlüssige Befestigung des Filtermoduls 7 an den leitungsstrukturseitigen Anschlussschnittstellen 21, 22 ermöglichen. Ein eine form- bzw. kraftschlüssige Befestigung eines Filtermoduls 7 an einer leitungsstrukturseitigen Anschlussschnittstelle 21, 22 ermöglichendes Befestigungselement kann z. B. eine Befestigungs- bzw. Spannschelle sein. Entsprechende Befestigungselemente können demnach z. B. teil- oder vollringartige bzw. -förmige Befestigungs- bzw. Spannschellen sein. Entsprechende Dichtungselemente können z. B. Dichtungsringe sein.

Die Anschlussschnittstellen 19, 20 aller Filtermodule 14 sind gleich (identisch) konfiguriert; dies vereinfacht den bedarfsweisen Wechsel jeweiliger Filtermodule 14.

Ersichtlich sind in den Fig. 2, 3 an den leitungsstrukturseitigen Anschlussschnittstellen 21, 22 nur Filtermodule 14 bzw. Filtermodulgehäuse 15 einer bestimmten geometrisch definierten Konfiguration, insbesondere einer bestimmten Länge, anschließbar; mithin können an den leitungsstrukturseitigen Anschlussschnittstellen 21, 22 nur Filtermodule 14 bzw. Filtermodulgehäuse 15 einer bestimmten geometrisch definierten Konfiguration, insbesondere einer bestimmten Länge, angeschlossen werden. Die Filtermodule 14 weisen daher eine entsprechende geometrisch definierte Konfiguration, insbesondere eine entsprechende Länge, auf, welche einen passgenauen Anschluss der Filtermodule 14 an die leitungsstrukturseitigen Anschlussschnittstellen 21, 22 ermöglicht. Die Gesamtlänge L der in den Fig. 2, 3 gezeigten Filtermodule 14 bzw. Filtermodulgehäuse 15 ist identisch.

Anhand der Fig. 2, 3 ist weiter ersichtlich, dass in jedem Filtermodulgehäuse 15 eine von dem Prozessgas 9 bzw. der Prozessgasströmung durchströmbare bzw. im Betrieb der Filtereinrichtung 7 durchströmte Strömungskanalstruktur 25 ausgebildet sein kann. Die Strömungskanalstruktur 25 umfasst einen den rohrförmigen Einströmabschnitt 26 zum Einströmen des zu filternden Prozessgases 9 bzw. einer zu filternden Prozessgasströmung in das Filtermodul 14 umfassenden ersten Strömungskanalstrukturabschnitt 25a und einen den rohrförmigen Ausströmabschnitt 27 zum Ausströmen des gefilterten Prozessgases 9 bzw. der gefilterten Prozessgasströmung aus dem Filtermodul 14 umfassenden zweiten Strömungskanalstrukturabschnitt 25b. Die beiden Strömungskanalstrukturabschnitte 25a, 25b kommunizieren miteinander. Der oder die in dem jeweiligen Filterkörperaufnahmeraum 16 aufgenommenen Filterkörper 18 sind zwischen dem ersten und dem zweiten Strömungskanalstrukturabschnitt 25a, 25b angeordnet. In dem ersten Strömungskanalstrukturabschnitt 25a ist ferner ein beispielhaft konusförmiges Strömungsführungselement 28 angeordnet, welches das zu filternde Prozessgas 9 gezielt zu den Filterkörpern 18 führt.

Die Fig. 2, 3 zeigen weiter, dass jedes Filtermodul 14 optional eine filtermodulgehäuseseitig angeordnete oder ausgebildete Verschlusseinrichtung 23 umfassen kann. Die jeweiligen Filtermodulgehäuse 15 weisen eine über die jeweilige Verschlusseinrichtung 23 verschließbare, eine Zugangsmöglichkeit in den jeweiligen Filterkörperaufnahmeraum 16 bildende Zugangsöffnung (nicht näher bezeichnet) auf. Über das Zusammenwirken der Verschlusseinrichtung 23 und der Zugangsöffnung ist ein gegebenenfalls, d. h. z. B. zu Servicezwecken, erforderlicher Wechsel eines oder mehrerer Filterkörper 18 möglich.

Die Verschlusseinrichtung 23 umfasst ein, gegebenenfalls bewegbar an dem Filtermodulgehäuse 15 angeordnetes bzw. ausgebildetes, deckelartiges Verschlusselement 24. In den Fig. 2, 3 gezeigten Ausführungsbeispielen ist das Verschlusselement 24 durch einen den rohrförmigen Einströmabschnitt 26 umfassenden Teil des ersten Strömungskanalstrukturabschnitts 25a gebildet.

Das Verschlusselement 24 ist zwischen einer Offenstellung, in welcher das Verschlusselement 24 derart relativ zu der Zugangsöffnung bewegt ist, dass ein Zugang in den Filterkörperaufnahmeraum 16 möglich ist, und einer in den Fig. 2, 3 gezeigten Schließstellung, in welcher das Verschlusselement 24 derart relativ zu der Zugangsöffnung bewegt ist, dass ein Zugang in den Filterkörperaufnahmeraum 16 nicht möglich ist, (schwenk)bewegbar gelagert. Das Verschlusselement 24 ist in der Schließstellung typischerweise derart relativ zu der Zugangsöffnung bewegt, d. h. insbesondere gegen die Zugangsöffnung bewegt, dass der Filterkörperaufnahmeraum 16 fluiddicht verschlossen ist.

## Patentansprüche

1. Vorrichtung (1) zur additiven Herstellung dreidimensionaler Objekte (2) durch sukzessives schichtweises selektives Belichten und damit einhergehendes sukzessives schichtweises selektives Verfestigen von Baumaterialschichten aus einem vermittels eines Energiestrahls verfestigbaren Baumaterial (3), umfassend eine, wenigstens ein, insbesondere rohrförmiges, Leitungselement umfassende Leitungsstruktur (12), welche von einem im Rahmen der Durchführung additiver Bauvorgänge in einer Prozesskammer (8) der Vorrichtung (1) entstehenden, insbesondere prozessbedingt entstehende Verunreinigungen enthaltenden, Prozessgas (9) durchströmbar ist, und eine in die Leitungsstruktur (12) geschaltete Filtereinrichtung (7), welche zur Filterung des Prozessgases (9) eingerichtet ist, **dadurch gekennzeichnet, dass** die Filtereinrichtung (7) mehrere Filtermodule (14) umfasst, welche auswechselbar in die Leitungsstruktur (12) geschaltet anordenbar oder angeordnet sind, wobei in die Leitungsstruktur (12) geschaltet angeordnete Filtermodule (14) über eine der Filtereinrichtung (7) zugeordnete Schalteinrichtung (29) individuell in einen Betriebszustand, in welchem diese von dem Prozessgas (9) durchströmbar in die Leitungsstruktur (12) geschaltet sind, und in einen Nichtbetriebszustand, in welchem diese nicht von dem Prozessgas (9) durchströmbar in die Leitungsstruktur (12) geschaltet sind, schaltbar.

2. Vorrichtung nach Anspruch 1, **dadurch gekennzeichnet, dass** die Schalteinrichtung (29) als eine mehrere Ventileinheiten (30) umfassende Ventileinrichtung ausgebildet ist oder eine solche umfasst, wobei die Ventileinheiten (30) der Ventileinrichtung jeweils einem in die Leitungsstruktur (12) geschaltet angeordneten Filtermodul (14) zuordenbar oder zugeordnet sind.

3. Vorrichtung nach Anspruch 1 oder 2, **dadurch gekennzeichnet, dass** die Leitungsstruktur (12) eine mehrere Anschlussschnittstellen (21, 22) umfassende Anschlusseinrichtung umfasst, wobei jeweilige Filtermodule (14) über eine jeweilige Anschlussschnittstelle (21, 22) in die Leitungsstruktur (12) geschaltet anordenbar sind.

4. Vorrichtung nach Anspruch 2 und 3, **dadurch gekennzeichnet, dass** jeder Anschlussschnittstelle (21, 22) eine Ventileinheit (30) zugeordnet ist.

5. Vorrichtung nach einem der vorhergehenden Ansprüche, **gekennzeichnet durch** eine der Filtereinrichtung (7) zugeordnete Erfassungseinrichtung (31), welche zur Erfassung einer einen Sättigungsgrad wenigstens eines in die Leitungsstruktur (12) geschaltet angeordneten Filtermoduls (14) beschreibenden Sättigungsinformation eingerichtet ist.

6. Vorrichtung nach Anspruch 5, **dadurch gekennzeichnet, dass** die Sättigungsinformation einen den Sättigungsgrad eines Filtermoduls (14) beschreibenden sättigungsgradabhängigen Parameter beschreibt, wobei ein entsprechender Parameter
das sättigungsgradabhängige Gewicht des Filtermoduls (14) bzw. eine sättigungsgradabhängige Gewichtsänderung des Filtermoduls (14),
der sättigungsgradabhängige Druck des Prozessgases (9) bzw. die sättigungsgradabhängige Druckdifferenz des Prozessgases (9) zwischen einem eine Einströmseite bildenden Einströmabschnitt (26) eines Filtermoduls (14) und einem eine Ausströmseite bildenden Ausströmabschnitt (27) des Filtermoduls (14),
die sättigungsgradabhängige Strömungsgeschwindigkeit des Prozessgases (9), insbesondere im Vergleich zu der Leistung einer die Prozessgasströmung erzeugenden Strömungserzeugungseinrichtung, insbesondere einer Pumpeneinrichtung (13), durch ein Filtermodul (14) bzw. die sättigungsgradabhängige Strömungsgeschwindigkeitsdifferenz zwischen einem eine Einströmseite bildenden Einströmabschnitt (26) eines Filtermoduls (14) und einem eine Ausströmseite bildenden Ausströmabschnitt (27) des Filtermoduls (14), oder
die sättigungsgradabhängige Zusammensetzung des durch ein Filtermodul (14) strömenden bzw. des aus dem Filtermodul (14) ausströmenden Prozessgases (9) ist.

7. Vorrichtung nach einem der vorhergehenden Ansprüche, **dadurch gekennzeichnet, dass** jedes Filtermodul (14) ein Filtermodulgehäuse (15) umfasst, wobei jedes Filtermodulgehäuse (15) einen geometrisch definiert konfigurierten Filterkörperaufnahmeraum (16) umfasst, welcher zur Aufnahme einer definierten Anzahl geometrisch definiert konfigurierter Filterkörper (18) eingerichtet ist, wobei jedes Filtermodul (14) filtermodulseitige Anschlussschnittstellen (19, 20) umfasst, über welche es bedarfsweise an Anschlussschnittstellen (21, 22) der Leitungsstruktur (12) anschließbar oder angeschlossen ist.

8. Vorrichtung nach Anspruch 7, **dadurch gekennzeichnet, dass** sich die Filterkörperaufnahmeräume (16) der jeweiligen Filtermodulgehäuse (15) in ihren jeweiligen Filterkörperaufnahmevolumina unterscheiden, sodass in jedem Filterkörperaufnahmeraum (16) nur eine definierte Anzahl geometrisch definiert konfigurierter Filterkörper (18) aufnehmbar ist.

9. Vorrichtung nach einem der vorhergehenden Ansprüche, **dadurch gekennzeichnet, dass** ein jeweiliges Filtermodul (14) eine vorkonfigurierbare oder vorkonfigurierte, gesondert handhabbare Baugruppe bildet.

10. Vorrichtung nach einem Ansprüche 7 bis 9, **dadurch gekennzeichnet, dass** die Anschlussschnittstellen (19, 20) aller Filtermodule (14) gleich konfiguriert sind.

11. Vorrichtung nach einem der Ansprüche 7 bis 10, **dadurch gekennzeichnet, dass** an den vorrichtungsseitigen Anschlussbereichen (21, 22) nur Filtermodulgehäuse (15) einer bestimmten geometrisch definierten Konfiguration, insbesondere einer bestimmten Länge, anschließbar sind, wobei alle Filtermodule (14) der Filtereinrichtung (7) eine entsprechende geometrisch definierte Konfiguration, insbesondere eine entsprechende Länge, aufweisen.

12. Vorrichtung nach einem der Ansprüche 7 bis 11, **dadurch gekennzeichnet, dass** der oder die in einem jeweiligen filtermodulgehäuseseitig umfassten Filterkörperaufnahmeraum (16) aufgenommenen Filterkörper (18) mit einem Presssitz in dem jeweiligen Filterkörperaufnahmeraum (16) aufgenommen sind.

13. Vorrichtung nach einem der Ansprüche 7 bis 12, **dadurch gekennzeichnet, dass** jedes Filtermodul (14) eine filtermodulgehäuseseitig angeordnete oder ausgebildete Verschlusseinrichtung (23) umfasst, wobei ein jeweiliges Filtermodulgehäuse (15) eine über die jeweilige Verschlusseinrichtung (23) verschließbare, eine Zugangsmöglichkeit in den jeweiligen Filterkörperaufnahmeraum (16) bildende Zugangsöffnung aufweist.

14. Vorrichtung nach einem der Ansprüche 7 bis 13, **dadurch gekennzeichnet, dass** in jedem Filtermodulgehäuse (15) eine von dem Prozessgas (9) durchströmbare oder durchströmte Strömungskanalstruktur (25) ausgebildet ist, wobei die Strömungskanalstruktur (25) einen einen Einströmabschnitt (26) zum Einströmen des zu filternden Prozessgases (9) in das Filtermodul (14) umfassenden ersten Strömungskanalstrukturabschnitt (25a) und einen einen Ausströmabschnitt (27) zum Ausströmen eines gefilterten Prozessgases (9) aus dem Filtermodul (14) umfassenden zweiten Strömungskanalstrukturabschnitt (25b) umfasst, wobei der oder die in dem jeweiligen filtermodulgehäuseseitig umfassten Filterkörperaufnahmeraum (16) aufgenommenen Filterkörper (18) zwischen dem ersten und dem zweiten Strömungskanalstrukturabschnitt (25a, 25b) angeordnet sind.
